(19) Europäisches Patentamt
European Patent Office
Office européen des brevets

(11) **EP 2 487 811 A1**

(12) **EUROPEAN PATENT APPLICATION**

(43) Date of publication:
**15.08.2012 Bulletin 2012/33**

(51) Int Cl.:
***H04B 10/08*** (2006.01)

(21) Application number: **11153308.9**

(22) Date of filing: **04.02.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Nokia Siemens Networks Oy
02610 Espoo (FI)**

(72) Inventors:
- **Striegler, Arne
  80337 München (DE)**
- **Xia, Chunmin
  81475 München (DE)**
- **Alfiad, Mohammad Saeed
  5621 BC Eindhoven (NL)**
- **Sleiffer, Vincentius Antonius Johannes
  6691 DR Gendt (NL)**

(54) **Method and device for monitoring distortion in an optical network**

(57)     A method and a device for monitoring of distortion in an optical network are provided, wherein at least one reference signal and at least one data signal are conveyed via an optical link and wherein a distortion of the at least one data signal is determined based on the at least one reference signal. Also, a corresponding transceiver and a communication system comprising any such device are suggested.

## Fig.1

**Description**

The invention relates to a method and to a device for data processing in an optical network. In particular, a corresponding transceiver and a communication system comprising any such device are suggested.

In optical communication networks, high spectral efficiency (determined in (bits/s)/Hz) is a key parameter for a cost-efficient network operation. For this reason, modulation formats such as differential phase shift keying (DPSK) or quadrature phase shift keying (QPSK) can be used to provide a robust, spectral efficient transmission system. The spectral efficiency can be further increased via polarization multiplexing (POLMUX); in particular, e.g., polarization multiplexed QPSK (POLMUX-QPSK).

POLMUX-QPSK with coherent detection is a modulation format that can be utilized in next-generation networks as it has advantages like high tolerance towards accumulated chromatic dispersion (CD) and polarization mode dispersion (PMD) in combination with a high spectral efficiency.

Coherent-detected polarization-multiplexed (CP) M-ary shift keying (MPSK) (also referred to as CP-MPSK) modulation combined with digital signal processing (DSP) is considered as a promising technique for high speed optical wavelength division multiplexed (WDM) networks. The combination of DSP and coherent detection in the receiver allows for the compensation of basically any linear signal distortion using linear finite impulse response (FIR) filters, including chromatic dispersion (CD) and polarization mode dispersion (PMD).

However, modulation formats enhancing the spectral efficiency get increasingly susceptible to signal distortions induced by nonlinear effects on the optical fiber. Effects such as self- and cross-phase modulation and four-wave mixing result in distortions and may thus limit the reach of the signals. This leads to high costs for the customers, because the signal has to be regenerated by additional hardware (e.g., expensive regenerators). Such high costs contravene the previously mentioned goal of avoiding costs by increasing the overall spectral efficiency.

However, current versions of DSPs cannot effectively compensate nonlinear effects, especially cross phase modulation (XPM) and cross polarization modulation (XPolM) in dense WDM systems. XPM and XPolM cause a significant deterioration of CP-MPSK modulated signals, especially for the signals transmitted over legacy networks, i.e. dispersion managed links comprising dispersion compensating modules (DCM). Hence, CP-MPSK transmission systems show performance degradation caused by nonlinear Kerr-effects in addition to noise.

It is thus important to determine a possibility that may indicate the impact of nonlinearities as well as noise in order to evaluate system performance for various conditions (e.g., with different fiber types and different channel neighbor modulation formats). This would allow for optimizing network planning before a deployment of the actual network or for monitoring a performance of the system during transmission.

It is also a motivation to upgrade a legacy (e.g., meshed) network comprising WDM networks by adding high speed channels of an advanced modulation format (e.g., 40G/100G CP-QPSK), which leads especially to the following problems:

- A suitable (preferably best or optimized) frequency assignment has to be determined for the added high speed channels since there is generally more than one channel available;
- A suitable (preferably best or optimized) routing for the upgraded network node has to be determined since there is generally more than one routing possible in the meshed network.
- A number of regenerators (i.e., re-timing, re-amplification and re-shaping) needs to be reduced by determining a maximum reach.

A current network planning may comprise the following steps:

(1) A customer requirement or request is noted.
(2) A pre-planning is conducted based on said requirement or request.
(3) Modeling, simulation and planning are conducted, e.g., by utilizing an according planning tool.
(4) The planned network is implemented, tested and re-optimized according to real field conditions.

This approach has the disadvantage that it may (at least partially) have to be conducted several times as the planning tool may provide incorrect performance estimations, e.g., due to several conditions that cannot or hardly be simulated. Another disadvantage of this approach is that each iteration may require coordination efforts between the customer and the vendor of the network (components).

If the customer wants to add or upgrade a service or if the customer wants to re-route a service, he has to ask the vendor for the planning of this upgrade or re-routing. After such planning (pre-planning, modeling, simulation, etc.) the service can be implemented or re-routed. As planning tools are based on a model of the actual performance, testing of the physical network is required. This leads to a complex, time-consuming and thus expensive approach for the customer as well as the vendor.

The **problem** to be solved is to overcome the disadvantages mentioned above and in particular to provide an approach that allows an efficient upgrade, service implementation or monitoring of an optical network.

This problem is solved according to the features of the independent claims. Further embodiments result from the depending claims.

In order to overcome this problem, a method is provided for data processing in an optical network, the method comprising

- conveying at least one reference signal and at least one data signal via an optical link,
- determining a distortion of the at least one data signal based on the at least one reference signal.

It is noted that the reference signal could be a signal of a light source (e.g., a CW-laser) that is not modulated with user data.

It is also noted that at a receiver, another (at least one) reference signal can be created and used to determine the distortion of the at least one data signal.

It is further noted that at the receiver, a frequency offset compensation and a phase noise compensation can be conducted based on the at least one data signal and the at least one reference signal received.

This approach in particular allows efficiently monitoring, upgrading or modifying an optical network, in particular services, links or routes of the optical network. It is also possible to compensate (at least partially) or to reduce the distortion of a deteriorated data signal based on the at least one reference signal.

In an embodiment, the reference signal is conveyed in a frequency grid comprising several channels, wherein at least one channel adjacent to the reference signal is used for conveying at least one data signal across the optical link.

The frequency grid may comprise several ranges of bandwidth (or frequency) to be used for several channels.

In another embodiment, the data signal and the reference signal are conveyed in separate channels of the frequency grid.

In a further embodiment, the reference signal is conveyed in a channel of the frequency grid near or adjacent

- to a data signal to be tested or for which the distortion is to be compensated or reduced; and/or
- to a center channel.

The reference signal can be located near the center channel in order to determine inter-channel nonlinearities.

It is noted that the reference signal can occupy a usual channel space in the frequency grid (in particular in case at least one empty channel is available). The reference signals can be placed (in particular in the middle) between two channels, each carrying a data signal.

It is also noted that the power of the reference signal can be flexibly set and/or adjusted based on, e.g., an amount of noise that is present in the actual system (which could have been determined previously).

In a next embodiment, the reference signal is transmitted together with the data signal in a channel of the frequency grid.

It is also an embodiment that the reference signal is filtered and coherently detected at a receiver and in particular the detected reference signal is stored and/or sent to a network management system.

Based on the reference signal detected, the network management system or the receiver can assess the performance of the system, which can result in an improved network (or service) planning, a network or service (e.g., channel or route) monitoring or a compensation (or reduction) of the distortion received in the at least one data signal.

For example, the approach presented can be used to assign, upgrade or modify a channel or route of an (e.g., meshed) optical network.

Pursuant to another embodiment, the reference signal is a continuous wave signal, in particular a signal generated by a continuous wave (CW) light source.

The CW light source may comprise at least one CW laser.

According to an embodiment, the reference signal is generated by a continuous wave light source that is used

- for transmitting the at least one data signal and
- as a local oscillator signal.

Hence, a transceiver may comprise a single light source or several light sources. It is an option that the light source comprises two lasers, one supplying the reference signal and the other being used as a local oscillator for the signal received.

According to another embodiment, the distortion of the at least one data signal is determined in view of at least one of the following parameters:

- an optical signal-to-noise ratio;
- a signal amplitude;
- a signal power;
- at least one signal phase,
- at least one state of polarization;
- a degree of polarization;
- a field standard deviation; and
- a variance of signal.

In yet another embodiment, based on the distortion determined, at least one of the following steps can be conducted:

- check if a service can be routed across the optical link with a predetermined performance;
- optimize routing paths within the network;
- reduce a number of 3Rs components;
- optimize wavelength assignments;
- check possible network scenarios;
- optimize the power of the service.

It is of advantage that at least some of these steps can be conducted in real-time, without traffic interruption and/or without having to make expensive and time consuming field tests.

According to a next embodiment, based on the distortion determined, the quality of the at least one data signal is improved.

Pursuant to yet an embodiment, a frequency offset compensation and a phase noise compensation are conducted based on the at least one data signal and the at least one reference signal received.

It is also an embodiment that the phase of the reference signal is subtracted from the phase of the data signal.

This can in particular be achieved by said phase noise compensation.

As a further embodiment, the at least one data signal is conveyed across the optical link utilizing at least one of the following modulation formats:

- a coherent detection modulation format;
- a polarization multiplexed modulation format;
- a single polarization modulation format.

The problem stated above is also solved by a device comprising a processing unit that is arranged such that the method as described is executable thereon.

The problem is further solved by a device for processing data in an optical network,

- comprising a receiver for receiving at least one reference signal and at least one data signal via an optical link,
- wherein a distortion of the at least one data signal is detectable based on the at least one reference signal.

The distortion can be used to improve the signal quality of the at least one data signal. Also, the distortion can be used for network planning purposes.

The problem is also solved by a transceiver for processing data in an optical network,

- comprising a transmitter for sending at least one first reference signal and at least one first data signal via an optical link,
- comprising a receiver for receiving at least one second reference signal and at least one second data signal via the optical link,
- wherein a distortion of the at least one second data signal is detectable based on the at least one second reference signal.

It is noted that a light source of the transmitter can at least partially be used (e.g., as a local oscillator) for the receiver.

It is noted that the steps of the method stated herein may be executable on this processing unit as well.

Furthermore, the problem stated above is solved by a communication system comprising at least one device as described herein.

Embodiments of the invention are shown and illustrated in the following figures:

Fig.1    shows an exemplary system setup to demonstrate measurement and performance evaluation with and without adding a CW channel;

Fig.2    shows CW channels (or signals) added to a channel grid, wherein the CW channels are inserted at frequencies that are not occupied by WDM channels;

Fig.3    shows a schematic network diagram for applying a CW signal to a meshed network comprising several optical nodes;

Fig.4    shows a block diagram visualizing an exemplary transmission system;

Fig.5    shows a schematic block diagram of the digital signal processing block;

Fig.6    shows a schematic block structure of an exemplary transmission system with a 40G-CP-QPSK channel surrounded by four 10G-NRZ-OOK channels;

Fig.7    shows a schematic diagram of an exemplary transmitter;

Fig.8    shows a schematic diagram of an exemplary receiver for compensating a distortion within at least one data signal received;

Fig.9    shows a schematic block structure at a receiver, wherein a combined data signal and CW signal (comprising, e.g., several data signals and several CW signals) is split at optical filters into data signals and into CW signals for further processing, in particular compensation purposes;

Fig.10    shows an exemplary diagram of a 50 GHz grid comprising data signals and CW signals between the data signals;

Fig.11    shows an exemplary diagram of steps of a method for processing data in an optical network.

It is in particular suggested to provide (e.g., implement) a test signal (e.g. via a test channel) by using a CW light source, in particular a CW laser, which allows tracking most signal degradations during a transmission over a route. For example, a CW signal is added on WDM channels and transmitted together with the WDM signals. After transmission the CW signal is (coherently) detected and the CW signal fields are saved and processed, e.g., offline or online. This allows an assessment of the actual transmission link and in particular to, e.g., at least partially compensate or reduce a deterioration of a data signal (e.g., in a WDM channel) that is conveyed over this transmission link.

It is noted that the CW signal can be conveyed via a separate channel. At least one data signal is conveyed via a frequency grid comprising at least one channel. Several data signals and several CW signals can be conveyed via the frequency grid, wherein a data signal and a CW signal can be conveyed in separate channels.

It is further noted that the CW signal is an example for a reference signal used to determine and/or (at least partially) compensate signal degradation.

As the CW signal is distorted by inter-channel nonlinearities from adjacent channels during its transmission over the optical link, an analysis of the CW signal can provide an estimate of the system performance of a data signal (also referred to as payload, traffic or WDM signal) that is, e.g., conveyed via a channel separate from the CW signal.

From the signals received, at least one of the following parameters can be determined (e.g., estimated and/or calculated):

-    an optical signal-to-noise ratio (OSNR);
-    a signal amplitude;
-    a signal power;
-    at least one signal phase;
-    at least one state of polarization (SOP).

It would also be beneficial to have a suitable parameter that reflects in particular an impact from noise and nonlinearities. In order to achieve this, for example the following two parameters related to the CW signal can be used:

(a) a degree of polarization (DOP); and
(b) a field standard deviation (FSTD) or variance of signal. Advantageously, based on the CW signal, a network provider can

- check if a service can be routed and still has sufficient performance;
- optimize routing paths within the network;
- reduce the number of 3Rs components, because the operator may take into account real performance and not worst case assumptions as is done by the planning tool;
- optimize wavelength assignments;
- check (all) possible network scenarios;
- optimize the power of the service.

It is in particular noted that this can be achieved

- in real-time;
- without traffic interruption; and/or
- without having to make expensive and time consuming field tests.

The approach presented can be realized (e.g., implemented) comprising in particular the following two steps:

1) A CW channel is added to the transmission CP-QPSK WDM channels. The added CW channel can be located near to a center channel (e.g., in order to estimate large inter-channel nonlinearities) or it can be located near to a particular channel that is subject to a test. The location of the CW channel added may comprise two scenarios:

- The CW channel can occupy one normal channel space (in the frequency band) if at least one empty channel space is available.
- The CW channel can be located in the middle between two neighboring channels.

With regard to the second scenario, a frequency of the added CW channel amounts to f0+$\Delta$f/2 or f0-$\Delta$f/2, wherein f0 is a channel frequency and $\Delta$f is a channel spacing. The power of the CW channel can be flexibly set and it can be adjusted based on the amount of noise that is actually present in the system.

2) A CW signal is transmitted together with other WDM channels. At the receiver side, the CW signal is filtered and coherently detected and then the signal field is saved and sent to a network manager. The two parameters, DOP and FSTD, are determined (e.g., calculated). Based on these parameters, a system performance can be estimated and a network planning can be carried out.

The parameters DOP and FSTD are two examples of parameters that can be used for determining (e.g., estimating and/or calculating) the performance of the system (e.g., (meshed) network) or a portion thereof. It is also an option to only determine one of the parameters DOP or FSTD.

As an example of implementation, a combined transmitter and receiver (i.e. a transceiver) can be used. Both can be deployed on at least one physical device (e.g., a card). This allows that the receiver and the transmitter share at least some components, which reduces the overall implementation costs.

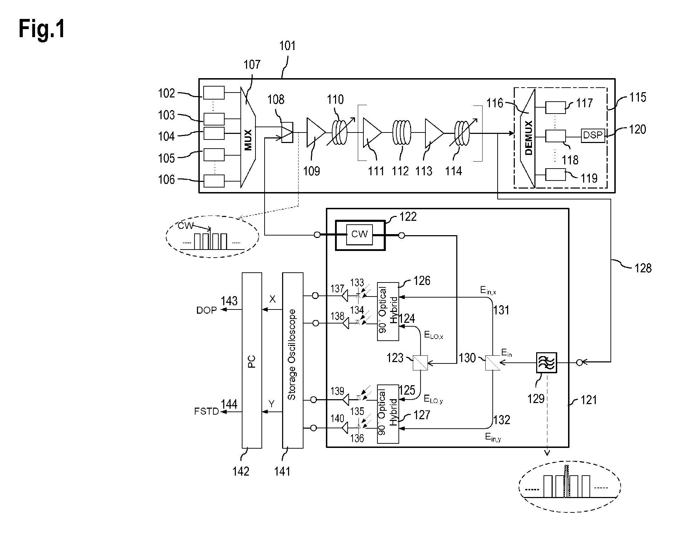

**Fig.1** shows an exemplary system setup to demonstrate measurement and performance evaluation with and without adding a CW channel.

An exemplary link 101 comprises several transmitters 102 to 106 that are connected via a multiplexer 107 to a first input of a coupler 108. The output of the coupler 108 is connected via a booster 109 to a pre-compensation fiber 110 and via a booster 111, a standard single mode fiber (SSMF) 112, a booster 113 and a dispersion compensating fiber (DCF) 114 to a receiving unit 115.

The receiving unit 115 comprises a demultiplexer 116 that is connected to several receivers 117 to 119, wherein each receiver's output can be fed to a digital signal processor (DSP), exemplarily shown by a DSP 120 connected to the receiver 118.

The components from the transmitters 102 to 106 to the pre-compensation fiber 110 as well as the receiving unit 115 can be deployed on a single board or card in a transceiver. A measurement unit 121 can also be located (e.g., at least partially) on the same board or card or at least within the same transceiver.

The measurement unit 121 comprises a CW source 122 that feeds a light signal to a second input of the coupler 108 as well as to a polarization beam splitter (PBS) 123, where it is split into a portion $E_{LO,x}$ 124 and a portion $E_{LO,y}$ 125 ("LO" indicates a local oscillator signal). The portion 124 is conveyed to a 90° optical hybrid 126 and the portion 125 is conveyed to a 90° optical hybrid 127.

A signal 128 is tapped on the receiving side before it enters the receiving unit 115. The signal 128 is fed to an optical filter 129 and the output of the optical filter 129 is conveyed to a PBS 130, where it is split into a portion $E_{in,x}$ 131 and a portion $E_{in,y}$ 132 (orthogonally polarized portions of an E-field). The portion 131 is conveyed to the 90° optical hybrid 126 and the portion 132 is conveyed to the 90° optical hybrid 127.

Mixing the signal of the CW source 122 and the received signal 128 (i.e. the x- and y-portions 131 and 132 of the received signal) in the 90° hybrids 126, 127 results in inphase (I) and quadrature (Q) components, which are then fed via photodiodes 133 to 136, which can be single-ended or balanced photodiodes (depending on, e.g., a complexity and/or a cost-efficiency of a particular scenario), and drivers 137 to 140 to e.g., a storage oscilloscope 141, which provides x- and y-signals to be processed and evaluated by a processing means 142 (e.g., a computer), which may thus determine, e.g., the parameters DOP 143 and/or FSTD 144. It is noted that the storage oscilloscope is only an exemplary embodiment; it is also an option to determine, in particular calculate, the parameters by an according processing means.

The CW source 122 can be located at the transmitter or at the transceiver. It is also an option that the CW source 122 and the local oscillator of the transmitter are integrated on a single card or board.

The approach presented can be used for various applications. The CW source 122 may in particular be a tunable CW source (with an adjustable wavelength).

If the measurement is not conducted simultaneously for one node, which transmits the CW signal and receives the CW signal at the same time, the CW source 122 can be used as transmitter and as local oscillator; in this case a single CW source is sufficient. It is, however, also a solution that the CW source 122 comprises two lasers, one being connected to the second input of the coupler 108 and the other being connected to the PBS 123.

The received WDM signal 128 is conveyed via the (narrowband) optical filter 129 to filter out the CW signal; as an alternative, the CW signal can be filtered out by a coherent wavelength selection.

Then the filtered signal is split into two polarizations by the PBS 130. Each polarization signal 131, 132 is coupled with the local oscillator signal 123 (via polarized LO-signals 124, 125), passed to the 90 degree optical hybrids 126, 127 and in a next stage detected by the photodiodes 133 to 136. The output of the drivers 137 to 140 can be determined and saved by the storage oscilloscope 141 and processed by the processing means 142 at each (optical) node or they can be collected and sent to a network management software (NMS) to provide a combined processing and in particular to determine the parameters DOP and FSTD.

The measurement unit 121 could be implemented in each (optical) node, wherein the output of the CW source 122 can be connected to the WDM channel utilizing said coupler 108 or by using an optical add-drop multiplexer (OADM), which may be already available at the optical node.

Measurement, adjustment and/or planning can be supervised by the NMS, which leads to a flexible, efficient and cost-efficient solution. For example, using the approach presented, a network operator can route CW test channels via any route possible at any wavelength and analyze the signal performance.

Further Advantages:

The solution presented can be efficiently used to estimate the performance of the system and hence to optimize network planning and design with a great degree of flexibility in particular for a meshed network (e.g., wavelength selection and/or assignment for upgraded WDM systems and routing selections) without having to send technical personnel to the location of the network component.

The concept can be utilized by the customer himself without having to interact with the vendor or network provider.

According to this solution, an optimum input power can be determined for each route and/or for each link. The approach can be applied to a broad variety of use cases and is largely independent from several physical parameters of the network, e.g., type of fiber, modulation format, channel spacing, data rate, etc.

Advantageously, the CW channel (or CW signal) added does not affect the current existing channels and therefore will not disturb established user traffic or impair the capacity of established links. In particular, the CW signal added does not lead to performance degradations.

Exemplary Use Case:

An actual setup may contain a CW channel and the DSP part can be used to calculate a bit error ratio (BER) of the centre channel. This BER is correlated to the DOP or FSTD. The power of the CW channel can be the same as the power of the other channels. After transmission, the CW channel can be demultiplexed by a narrowband Gaussian optical filter. Preferably, the optical bandwidth is wide enough to cover nonlinear crosstalk as well as noise, but not be too wide to also filter neighboring channels, which would lead to an overestimate of the nonlinearity. The bandwidth of the Gaussian filter can be chosen based on a trade-off between the nonlinear crosstalk and the linear crosstalk.

The link between optical nodes may comprise 20 spans of standard single mode fibers (SSMF) or large effective area fibers (LEAF) with each being 80km and the corresponding dispersion compensating fibers (DCF) are applied to compensate partially the dispersion of the transmission fibers. Various nonlinear effects (SPM, XPM, XPolM and FWM) can be considered. A pre-compensation as well as a residual dispersion per-span can be optimized for conventional OOK or DPSK transmissions.

The centre channel can be demultiplexed and processed further by a DSP-based receiver. By adjusting the input power and based on the calculated BER, the required optical-to-signal-ratio (OSNR) to achieve a BER of, e.g., $10^{-3}$ can be calculated. The added CW signal does not cause any performance degradation.

It is noted that polarization mode dispersion (PMD) can depolarize CP-QPSK signals and hence reduce the data-dependent nonlinear polarization rotation, i.e. interaction of PMD and nonlinearity leads to a reduced XPolM effect. Hence, PMD may be considered evaluating the performance of the system, although PMD itself can be fully compensated by DSP.

As the BER is determined mainly by two effects, i.e. noise and nonlinearities, the BER is dominated by noise when the input power is low and the BER is dominated by nonlinear effects when the input power is high. Hence, there may be an optimum input power for an optimized performance of a given transmission link. DOP and FSTD values are also directly dependent on these two effects, i.e. noise and nonlinearity: DOP is degraded and FSTD is increased with a higher amount of noise and an increased nonlinearity.

Optimization of the signal input power

It is an option to determine (e.g., estimate) an optimized input power based on the FSTD. For example, considering the fact that a SPM effect is not taken into account by the CW signal, the estimated optimized input power based on the FSTD can be regarded as being underestimated by approximately 2.5dB for SSMF and 1dB for LEAF.

Hence, the optimized input power P est(BER) can be determined based on the estimated power P_est(FSTD) by using a correction term, e.g.,

- in case of the SSMF: P_est(BER) = P_est (FSTD) + 2.5dBm
- in case of the LEAF: P_est (BER) = P_est (FSTD) + 1.0dBm
- in case of mixed fibers (SSMF and LEAF): P_est (BER) = P_est (FSTD) + 1.7dBm.

Optimization of wavelength assignment and routing

It is also an option to compare a relative performance using FSTD for different network planning and/or design scenarios and then select the best case.

In terms of the minimum values of BER and FSTD, the smaller the BER the smaller the FSTD. Hence, FSTD values can be used to predict a relative performance for different scenarios such as different routings. The following describes two scenarios for this application:

(i) A channel frequency assignment for a system upgrade application can be optimized: For example, new channels (e.g. 40G/100G CP-QPSK) are inserted to a free channel grid in an existing infrastructure (e.g. 10G OOK, 40G DPSK, 40G/100G CP-QPSK or combinations thereof).

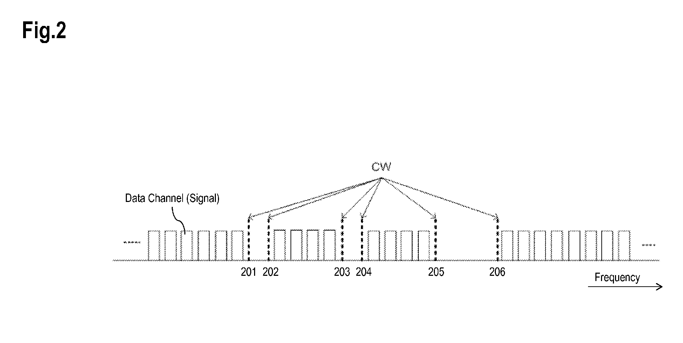

**Fig.2** shows CW channels (or signals) added to a channel grid, wherein the CW channels are inserted at frequencies that are not occupied by WDM channels.

As there are several free channels and/or different modulation formats in a legacy WDM network to be upgraded, there is more than one possibility to insert the new channels.

The CW signal with different frequencies 201 to 206 can be added to any of these free channels (e.g., by accordingly adjusting a tunable CW laser). Next, a set of FSTD values can be obtained for all of these possibilities of inserting the CW signal. The frequency with the least FSTD value might be considered a good candidate for inserting a new WDM channel.

(ii) A wavelength routing for a meshed network design and planning can be optimized.

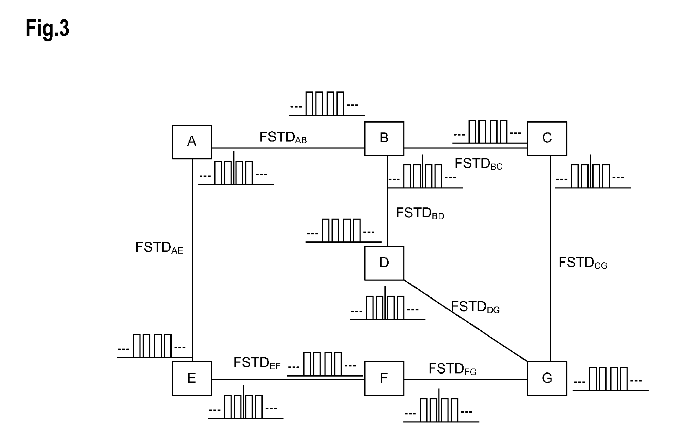

**Fig.3** shows a schematic network diagram for applying a CW signal to a meshed network comprising the nodes A to G. For each optical network node (or wavelength selective switch (WSS)), a CW signal is added to the transmitted WDM signals and dropped at the next node. Then, the FSTD value for this optical multiplex section (OMS) is determined, e.g., measured or calculated. Thus, one FSTD value for each OMS can be evaluated. Based on these FSTD values, the network planner can find out the best route with the highest nonlinearity tolerance between nodes.

According to the example shown in Fig.3, there are three possible routes for routing a signal from the node A to the node G, i.e.

- a route "1": A - B - C - G;
- a route "2": A - B - D - G; and

- a route "3": A - E - F - G.

A most suitable route can be determined based on a minimum overall FSTD value. This overall FSTD can be determined, e.g., by either calculating the sum mean value or the square mean value:

$$\mathrm{FSTD}_1 = \frac{1}{3} \cdot (\mathrm{FSTD}_{AB} + \mathrm{FSTD}_{BC} + \mathrm{FSTD}_{CG});$$

$$\mathrm{FSTD}_2 = \frac{1}{3} \cdot (\mathrm{FSTD}_{AB} + \mathrm{FSTD}_{BD} + \mathrm{FSTD}_{DG});$$

$$\mathrm{FSTD}_3 = \frac{1}{3} \cdot (\mathrm{FSTD}_{AE} + \mathrm{FSTD}_{EF} + \mathrm{FSTD}_{FG});$$

or

$$\mathrm{FSTD}_1 = \left( \frac{1}{3} \cdot \left( (\mathrm{FSTD}_{AB})^2 + (\mathrm{FSTD}_{BC})^2 + (\mathrm{FSTD}_{CG})^2 \right) \right)^{0.5};$$

$$\mathrm{FSTD}_2 = \left( \frac{1}{3} \cdot \left( (\mathrm{FSTD}_{AB})^2 + (\mathrm{FSTD}_{BD})^2 + (\mathrm{FSTD}_{DG})^2 \right) \right)^{0.5};$$

$$\mathrm{FSTD}_3 = \left( \frac{1}{3} \cdot \left( (\mathrm{FSTD}_{AE})^2 + (\mathrm{FSTD}_{EF})^2 + (\mathrm{FSTD}_{FG})^2 \right) \right)^{0.5};$$

wherein $\mathrm{FSTD}_i$ (i=1..3) indicates the FSTD value of particular route i across the meshed network and $\mathrm{FSTD}_{kl}$ indicates the FSTD value of a link from an optical node k to an optical node l. It is noted that in this example, the FSTD value is determined as one exemplary parameter; other parameters or combinations of parameters can also be utilized in order to assess a route or a link.

The two scenarios (i) and (ii) can also be combined, e.g., used in a single application.

It is noted that if a (integrated) card comprising two tunable CW lasers is installed in each network node, it is possible to determine the FSTD values between any two nodes in the meshed network and thus to estimate an optimized input power or a relative performance with a fixed input power simultaneously.

Phase noise compensation in coherent receivers

CP-QPSK (in particular 40G-CP-QPSK) can be regarded as an example of a phase sensitive modulation format with high spectral efficiency. It is noted, however, that the solution described works with all kinds of phase modulated signals with or without polarization multiplexing.

A disadvantage of phase sensitive modulation formats are phase shifts induced by non-linear effects such as cross-phase modulation (XPM). XPM results from a variation of signal power of adjacent (neighboring) channels; compensating XPM is difficult if at all possible.

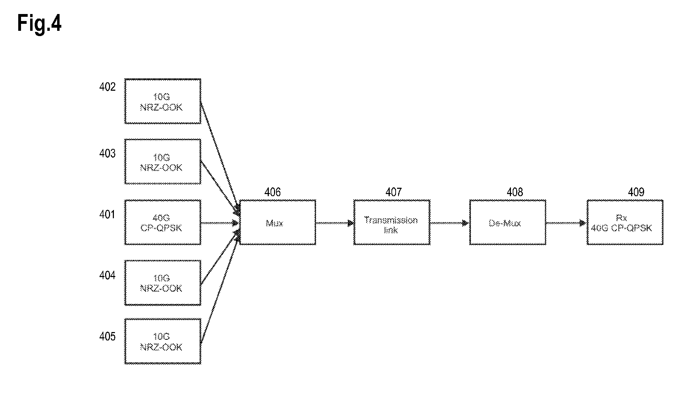

**Fig.4** shows an example of a transmission system. A 40G-CP-QPSK channel 401 is surrounded by 10G-NRZ-OOK channels 402 to 405 with 50GHz channel spacing. The signals are combined by a multiplexer 406 and conveyed over a transmission link 407 to a demultiplexer 408. The demultiplexer 408 supplies a receiver 409 with the 40G-CP-QPSK channel. The transmission link 407 comprises 5times 80km of LEAF type transmission medium with a per channel fiber input power of 0dBm. This represents a typical upgrade scenario that could be found in a customer's network.

During the transmission, XPM induces a strong phase noise to the CP-QPSK channel 401 so that the optical performance deteriorates significantly.

As the channels 402 to 405 are also X-polarized, the constellations obtained at the receiver show stronger phase variations of the X-polarized signal than of the Y-polarized signal. This results in an overall poor transmission performance.

It is noted that the optical reach may be reduced by a factor of about 3 to 4 for SSMF and LEAF, in case 10G-NRZ-OOK channels are used as neighbors to a 40G-CP-QPSK channel. It is further noted that even an optical service channel (OSC) reduces the optical performance of the CP-QPSK signal due to XPM.

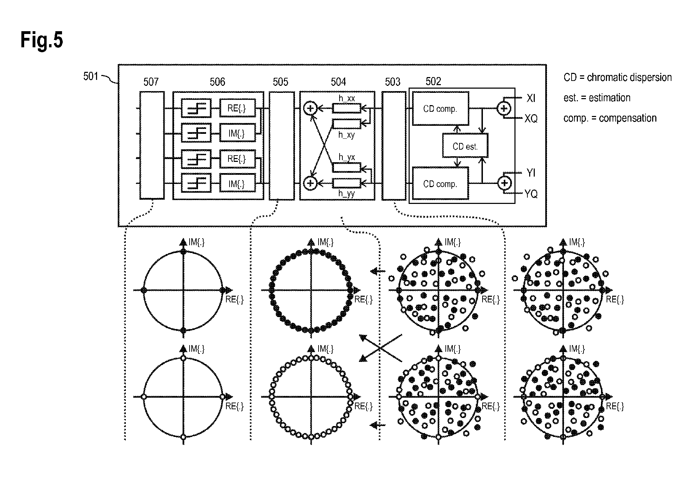

**Fig.5** shows a schematic block diagram of the digital signal processing block 501. Such digital processing may be conducted in the electrical domain of a coherent receiver.

The signals fed to the digital signal processing block 501 are conveyed to a frequency domain equalization (FDE) stage 502, which is applied to estimate and compensate an accumulated chromatic dispersion (CD) along the optical link. The FDE stage 502 is followed by a clock recovery 503 and a time domain equalization (TDE) stage 504 to compensate the DGD/PMD, i.e. a residual CD after FDE and demultiplexing of the two polarizations.

In the FDE stage 502 the signal is transferred into the frequency domain using FFT. The frequency domain is better suited to compensate for the CD, because here the inverse linear part of the Schrödinger equation can be applied. After CD compensation in the FDE stage 502, the signal is transformed back to the time domain using IFFT. As CD compensation is applied per polarization, the FDE stage 502 is not able to demultiplex the polarizations. Before the TDE stage 504, the clock recovery 503 is conducted.

If all signal impairments are assumed to be linear, a matrix H (transfer function) can be determined, which may be an approximation of the inverse matrix H to reverse the linear effects of the channel. The matrix H can be summarized as H = [$h_{xx}$ $h_{yx}$; $h_{xy}$ $h_{yy}$], which is represented by a butterfly structure of the TDE stage 504. Multiplying the received signal with the transfer function H allows determining an approximation of the transmitted signal. Hence, the TDE stage 504 can compensate for the residual CD, PMD as well as demultiplex the two polarizations.

The TDE stage 504 may provide a limited tolerance towards nonlinear impairments. After the TDE stage 504, the signal is processed by a carrier recovery 505, which corrects an offset in frequency and phase between the transmitter and LO-laser (e.g., by using the Viterbi-and-Viterbi algorithm). A frequency offset can be estimated by integrating the phase change over a large number of symbols or by estimating the shift in the frequency domain. After the frequency offset is reduced or (in particular substantially) removed, carrier phase estimation (CPE) is applied to remove the phase offset. Next, a digital decision is made on the symbols using a slicer 506. Then, a DQPSK decoder 507 determines the resulting bit stream.

Fig.5 also visualizes constellations that could be associated with the various processing stages as indicated.

The processing shown in Fig.5 thus comprises at least the following stages:

(1) The digital signal processing block (e.g., a DSP) 502 estimates the accumulated dispersion and compensates the accumulated dispersion.
(2) The signals are fed into the clock recovery 503 and
(3) afterwards the polarization mixing is compensated in the TDE stage 504.
(4) After the carrier recovery stage 505
(5) the signals are analyzed by the binary decision and decoding stage 506, 507.

In this setup, the phase noise induced during transmission is taken into account in the binary decision process according to (5) above, which leads to a high amount of BER.

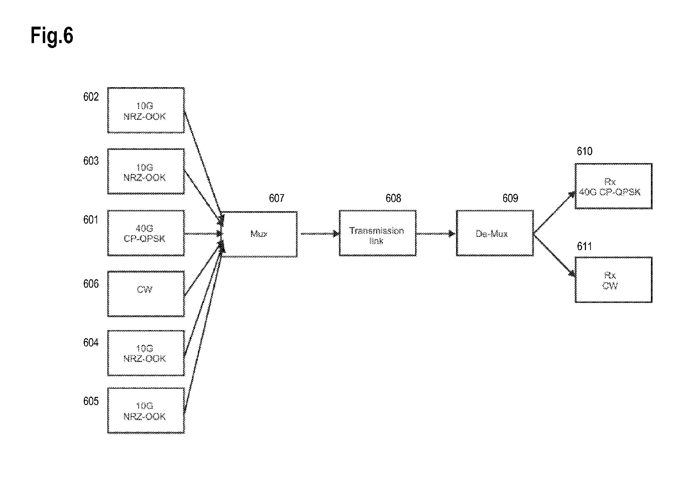

**Fig.6** shows a schematic block structure of an exemplary transmission system. A 40G-CP-QPSK signal or channel 601 is surrounded by 2x2 10G-NRZ-OOK channels 602 to 605. However, next to the signal 601 a CW signal 606 with orthogonal X- and Y-polarizations is added.

All the signals or channels 601 to 606 are fed to a multiplexer 607 and are conveyed via a transmission link 608 to a receiver, where a demultiplexer 609 separates the 40G-CP-QPSK signal 610 from the CW signal 611.

The receiver may thus analyze the signals received. The 40G-CP-QPSK signal 610 and the CW signal 611 experienced nearly the same XPM of the adjacent channels 602 to 605, small differences may be based on a wavelength difference induced walk-off by dispersion and by intra-channel effects.

In order to reduce phase noise, the phase of the CW signal 611 can be subtracted from the phase of the CP-QPSK signal 610. This results in an overall phase noise being significantly reduced, which leads to a clear constellation diagram, i.e. the symbols can be detected, in particular be well separated from each other. Hence, such phase noise compensation results in an improved symbol detection at the receiver.

The phase noise compensation can be realized by adapting the transmitter and/or the receiver accordingly.

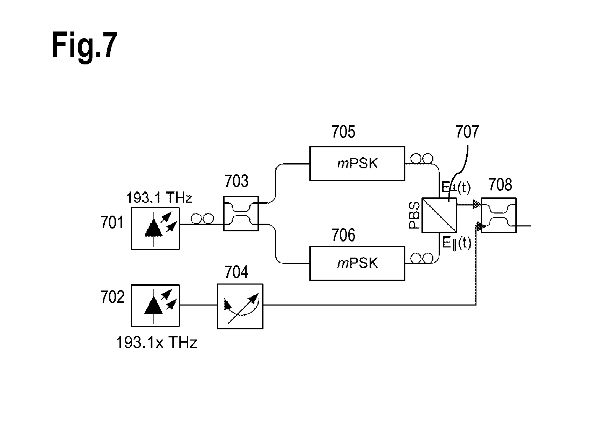

**Fig.7** shows a schematic diagram of an exemplary transmitter. A CP-QPSK transmitter comprises a light source 701 driven at a frequency f1 (amounting to, e.g., 193.1 THz), feeding light via a fiber to a splitter 703 and from the splitter via two parallel mPSK-modulators 705 and 706 to a PBS 707. The output of the PBS 707 provides a signal of a first polarization that is fed to a first input of a coupler 708 (or combiner).

A CW signal is generated by a light source 702 with a frequency f2 comprising an offset Δf compared to the frequency f1 of the light source 701. The light source 702 conveys light at said frequency f2 to a polarization shifter 704, which distributes the optical power equally between the two polarizations, and afterwards feeds it to the coupler 708 Thus, the output of the splitter 708 provides a signal comprising the CP-QPSK modulated signal and the CW signal.

The polarization of the CW signal provided by the light source 702 is aligned with one polarization axis of the CP-QPSK modulated signal and rotated by 45 degree afterwards so that a CW signal with an orthogonal polarization (compared to the polarization of the CP-QPSK modulated signal) is provided. As a result, the CP-QPSK modulated signal (comprising, e.g., user data or traffic of any kind) and the CW signal have aligned polarizations.

It is noted, however, that two light sources (e.g., laser diodes) can be used, wherein the light sources have an offset so that the approach presented can be used with carrier offset modulation formats, such as carrier offset CP-QPSK modulation.

Both signals are transmitted over the optical link. Non-linear effects, such as cross-phase modulation, are experienced by both, the CW signal and the CP-QPSK (data) signal. In other words, the phase noise is (also) logged by the CW signal (for later use in the receiver).

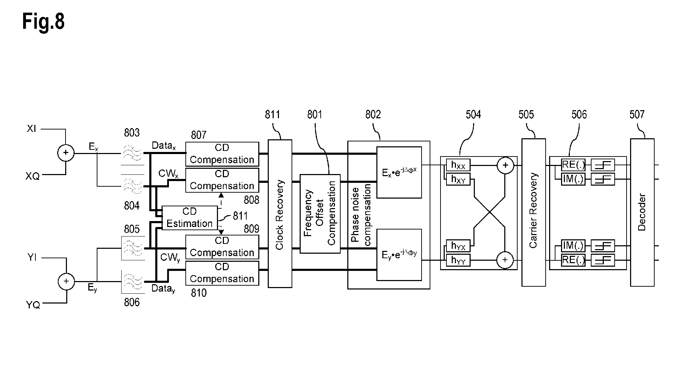

**Fig.8** shows a schematic diagram of an exemplary receiver. This partially corresponds to the receiver shown in and explained with regard to Fig.5. However, in particular a "frequency offset compensation stage" 801 and a "phase noise compensation stage" 802 are added.

At the receiver, the two polarizations are mixed with a local oscillator signal and detected by a photo diode. In the DSP of the receiver, a real and imaginary part XI, XQ and YI, YQ of the signals can thus be determined.

The CW signal and the CP-QPSK signal (also referred to as data signal) received are electronically filtered by filters 803 to 806 (a separate filter is provided for each polarization X and Y of each of the signals):

$$\mathrm{Data}_X = XI_{\mathrm{data}} + i \cdot XQ_{\mathrm{data}} = E_x$$

$$\mathrm{Data}_Y = YI_{\mathrm{data}} + i \cdot YQ_{\mathrm{data}} = E_y$$

$$CW_X = XI_{cw} + i \cdot XQ_{cw}$$

$$CW_Y = YI_{cw} + i \cdot YQ_{cw}$$

Afterwards, the filtered signals are conveyed to a CD compensation stage comprising several CD compensation units 807 to 810 and a CD estimation unit 811. The outputs of the CD compensation stage, in particular of each of the CD compensation units 807 to 810 are fed to a clock recovery 811. The resulting data signals are named $E_x$ and $E_y$.

Then, the phase information of the CW signal is analyzed and subtracted from the data signal (by the frequency offset compensation stage 801 and the phase noise compensation stage 802).

The frequency offset Δf between the data signal and the CW signal is compensated by calculating

$$CW_X := CW_X \cdot e^{-i \cdot t \cdot 2\pi \Delta f}$$

$$CW_Y := CW_Y \cdot e^{-i \cdot t \cdot 2\pi \Delta f}$$

in the frequency offset compensation stage 801. A phase variation induced to the CW signal is analyzed by

$$\Delta \phi x = \arg(CW_X)$$

$$\Delta \phi y = \arg(CW_Y)$$

and is subtracted from the phase of the data signal

$$E_X := E_X \cdot e^{-i \cdot \Delta \phi x}$$

$$E_Y := E_Y \cdot e^{-i \cdot \Delta \phi y}$$

in the phase noise compensation stage 802. Then the phase error is reduced.

The output of the phase noise compensation stage 802 is fed to a TDE stage (see 504 in Fig.5) and further via a carrier recovery stage (see 505 in Fig.5) and a slicer (see 506 in Fig.5) to a decoder (see 507 in Fig.5).

Hence, according to this solution, phase noise compensation using a CW signal increases the reach of the data signal.

Further Advantages and Implementations:

It is noted that the approach presented can be implemented or realized in various designs or scenarios.

It is an option to use several CW signals.

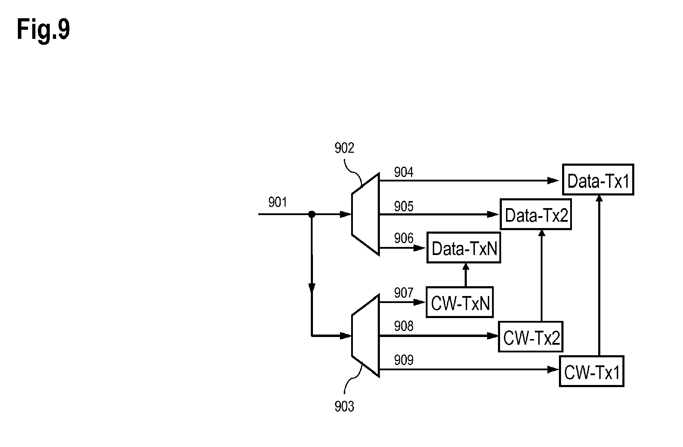

For example, the CW signal can be filtered by an optical filter and fed to a DSP. This may require at least one additional filter and a photodiode. **Fig.9** shows a schematic block structure at a receiver, wherein a combined data signal and CW signal 901 (comprising, e.g., several data signals and several CW signals) is split at optical filters 902 and 903 into data signals 904 to 906 and into CW signals 907 to 909. The CW signal 907 is used to compensate a distortion in the data signal 906, the CW signal 908 is used to compensate a distortion in the data signal 905 and the CW signal 909 is used to compensate a distortion in the data signal 904.

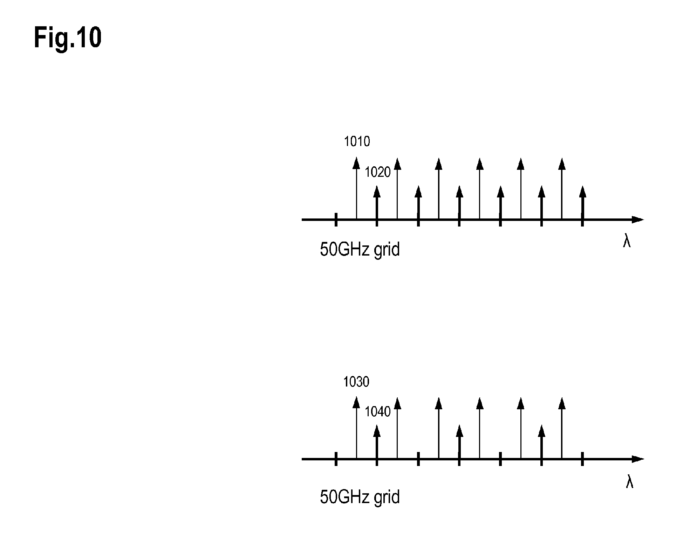

The CW signals could be placed between the signal channels (e.g., the channels carrying user traffic). **Fig.10** shows an exemplary diagram of a 50 GHz grid comprising data signals 1010 and CW signals 1020 between the data signals. The CW signals can also be flexibly arranged as shown in the bottom diagram of Fig.10 comprising data signals 1030 and CW signals 1040 (e.g., between every second data signal 1030). This allows to flexibly adjust the number of CW signals dependent on, e.g., the resources available. This scenario can be used, e.g., in point-to-point links.

The CW signals can be placed within a channel grid (see also Fig.10).

The CW signal information can be used for several adjacent channels. The phase information of the CW can be used for a plurality of data channels to compensate the phase error. The number of CW signals can be reduced according to, e.g., a customer's or operator's demand in a specific scenario. The phase information between different CW signals can be inter- and extrapolated, as the induced phase shift is a function of the wavelength.

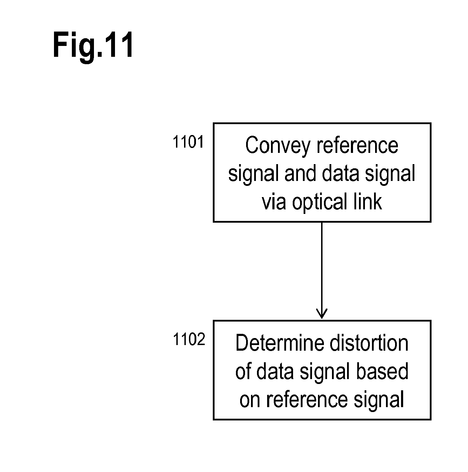

**Fig.11** shows an exemplary diagram of steps of a method for processing data in an optical network. In a step 1101 at least one reference signal and at least one data signal are conveyed via an optical link and in a step 1102 a distortion of the data signal can be determined based on the reference signal. It may be an option that the distortion determined is reduced or a channel quality is determined based on said distortion. Other options apply as described herein.

In a DSP the CW signal can be used for optimizing the dispersion and/or polarization compensation. The DSP may use the CW signal instead of the data signal to calculate the optimum setting for CD and PMD compensation. This is beneficial, because the CW has no phase changes due to bitwise phase modulation. This may reduce the time to optimize the filter settings (reduced training sequence) so that the receiver can react faster to changes of the polarization.

The approach presented could in particular be used for

- all coherent detected modulation formats, e.g., BPSK, 16QAM, m-ary quadrature modulations, OFDM, etc.; or
- polarization multiplexed formats and single polarization formats.

**List of Abbreviations:**

| | |
|---|---|
| 3R | re-timing, re-amplification and re-shaping |
| BER | bit error ratio |
| BPSK | binary phase shift keying |
| CD | chromatic dispersion |
| CP | coherent-detected polarization-multiplexed |
| CP-MPSK | CP M-phase shift keying |
| CP-QPSK | CP quadrature phase shift keying |
| CW | continuous wave |
| DCF | compensating fiber |
| DCM | dispersion compensating modules |
| DGD | differential group delay |
| DOP | degree of polarization |
| DPSK | differential phase shift keyed |
| DSP | digital signal processing |
| FDE | frequency domain equalization |
| FFT | fast Fourier transform |
| FIR | finite impulse response |
| FSTD | field standard deviation |
| FWM | four wave mixing |
| IFFT | inverse FFT |
| LEAF | large effective area fiber |

| NMS | network management system |
| NRZ | non-return-to-zero |
| OADM | optical add-drop multiplexer |
| OMS | optical multiplex section |
| OOK | on-off keying |
| OSC | optical service channel |
| OSNR | optical signal-to-noise ratio |
| PBS | polarization beam splitter |
| PMD | polarization mode dispersion |
| QPSK | quadrature phase shift keying |
| ROSNR | required optical signal-to-noise ratio |
| SOP | state of polarization |
| SPM | self-phase modulation |
| SSMF | standard single mode fiber |
| TDE | time domain equalization |
| WDM | wavelength division multiplex |
| WSS | wavelength selective switch |
| XPM | cross phase modulation |
| XPolM | cross polarization modulation |

**Claims**

1.  A method for data processing in an optical network, the method comprising

    - conveying at least one reference signal and at least one data signal via an optical link,
    - determining a distortion of the at least one data signal based on the at least one reference signal.

2.  The method according to claim 1, wherein the reference signal is conveyed in a frequency grid comprising several channels, wherein at least one channel adjacent to the reference signal is used for conveying at least one data signal across the optical link.

3.  The method according to claim 2, wherein the data signal and the reference signal are conveyed in separate channels of the frequency grid.

4.  The method according to any of claims 2 or 3, wherein the reference signal is conveyed in a channel of the frequency grid near or adjacent

    - to a data signal to be tested or for which the distortion is to be compensated or reduced; and/or
    - to a center channel.

5. The method according to claim 1, wherein the reference signal is transmitted together with the data signal in a channel of a frequency grid.

6. The method according to any of the previous claims, wherein the reference signal is filtered and coherently detected at a receiver and in particular the detected reference signal is stored and/or sent to a network management system.

7. The method according to any of the preceding claims, wherein the reference signal is a continuous wave signal, in particular a signal generated by a continuous wave light source.

8. The method according to claim 7, wherein the reference signal is generated by a continuous wave light source that is used for transmitting the at least one data signal and as a local oscillator signal.

9. The method according to any of the preceding claims, wherein the distortion of the at least one data signal is determined in view of at least one of the following parameters:

   - an optical signal-to-noise ratio;
   - a signal amplitude;
   - a signal power;
   - at least one signal phase,
   - at least one state of polarization;
   - a degree of polarization; and
   - a field standard deviation;
   - a variance of signal.

10. The method according to any of the preceding claims, wherein based on the distortion determined, at least one of the following steps can be conducted:

    - check if a service can be routed across the optical link with a predetermined performance;
    - optimize routing paths within the network;
    - reduce a number of 3Rs components;
    - optimize wavelength assignments;
    - check possible network scenarios;
    - optimize the power of the service.

11. The method according to any of the preceding claims, wherein based on the distortion determined, the quality of the at least one data signal is improved.

12. The method according to any of the preceding claims, wherein a frequency offset compensation and a phase noise compensation are conducted based on the at least one data signal and the at least one reference signal received.

13. The method according to any of claims 11 or 12, wherein the phase of the reference signal is subtracted from the phase of the data signal.

14. The method according to any of the preceding claims, wherein the at least one data signal is conveyed across the optical link utilizing at least one of the following modulation formats:

    - a coherent detection modulation format;
    - a polarization multiplexed modulation format;
    - a single polarization modulation format.

15. A device for processing data in an optical network,

    - comprising a receiver for receiving at least one reference signal and at least one data signal via an optical link,
    - wherein a distortion of the at least one data signal is detectable based on the at least one reference signal.

16. A transceiver for processing data in an optical network,

    - comprising a transmitter for sending at least one first reference signal and at least one first data signal via an optical link,
- comprising a receiver for receiving at least one second reference signal and at least one second data signal via the optical link,
- wherein a distortion of the at least one second data signal is detectable based on the at least one second reference signal.

17. A communication system comprising at least one of the devices according to any of claims 15 or 16.

# Fig.1

Fig.2

# Fig.3

# Fig.4

## Fig.5

CD = chromatic dispersion
est. = estimation
comp. = compensation

# Fig.6

602 | 10G NRZ-OOK

603 | 10G NRZ-OOK

601 | 40G CP-QPSK

606 | CW

604 | 10G NRZ-OOK

605 | 10G NRZ-OOK

607 | Mux

608 | Transmission link

609 | De-Mux

610 | Rx 40G CP-QPSK

611 | Rx CW

# Fig.7

**Fig.8**

**Fig.9**

# Fig.10

1010

1020

50GHz grid

λ

1030

1040

50GHz grid

λ

# Fig.11

1101 | Convey reference signal and data signal via optical link

1102 | Determine distortion of data signal based on reference signal

Europäisches
Patentamt

European
Patent Office

Office européen
des brevets

# EUROPEAN SEARCH REPORT

**Application Number**

EP 11 15 3308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/071985 A1 (MORI SHOTA [JP] ET AL) 17 April 2003 (2003-04-17) * the whole document * | 1-17 | INV. H04B10/08 |
| X | WO 2004/019073 A2 (RED SKY SYSTEMS INC [US]) 4 March 2004 (2004-03-04) * abstract * * page 5, line 5 - page 7, line 9 * * figure 1 * | 1-17 | |
| X | US 6 795 607 B1 (ARCHAMBAULT JEAN LUC [US] ET AL) 21 September 2004 (2004-09-21) * abstract * * column 2, lines 31-52 * * column 3, lines 8-19 * * column 4, lines 45-61 * * figures 1, 2 * | 1-17 | |
| X | US 2009/154938 A1 (XIA TIEJUN J [US] ET AL) 18 June 2009 (2009-06-18) * abstract * * paragraph [0015] * * paragraphs [0063] - [0066] * * paragraph [0076] * * figures 7, 10 * | 1-17 | TECHNICAL FIELDS SEARCHED (IPC) H04B |
| X | EP 2 230 782 A1 (ALCATEL LUCENT [FR]) 22 September 2010 (2010-09-22) * abstract * * paragraphs [0054] - [0068] * | 1-17 | |

-/--

The present search report has been drawn up for all claims

| Place of search | Date of completion of the search | Examiner |
|---|---|---|
| Munich | 20 July 2011 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 15 3308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAKESHI HOSHIDA ET AL: "Network innovations brought by digital coherent receivers", OPTICAL FIBER COMMUNICATION (OFC), COLLOCATED NATIONAL FIBER OPTIC ENGINEERS CONFERENCE, 2010 CONFERENCE ON (OFC/NFOEC), IEEE, PISCATAWAY, NJ, USA, 21 March 2010 (2010-03-21), pages 1-3, XP031677037, * Par.4. and 5. * * figure 5(a) * ----- | 1-17 | |
| | | | TECHNICAL FIELDS SEARCHED (IPC) |

The present search report has been drawn up for all claims

| Place of search | Date of completion of the search | Examiner |
|---|---|---|
| Munich | 20 July 2011 | Rolan Cisneros, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                      
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 15 3308

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2011

| Patent document cited in search report | | Publication date | Patent family member(s) | | Publication date |
|---|---|---|---|---|---|
| US 2003071985 | A1 | 17-04-2003 | JP | 3957136 B2 | 15-08-2007 |
| | | | JP | 2003121303 A | 23-04-2003 |
| WO 2004019073 | A2 | 04-03-2004 | AU | 2003265536 A1 | 11-03-2004 |
| | | | US | 2004096214 A1 | 20-05-2004 |
| US 6795607 | B1 | 21-09-2004 | NONE | | |
| US 2009154938 | A1 | 18-06-2009 | AU | 2008338787 A1 | 25-06-2009 |
| | | | CN | 101933255 A | 29-12-2010 |
| | | | EP | 2245767 A1 | 03-11-2010 |
| | | | WO | 2009079168 A1 | 25-06-2009 |
| EP 2230782 | A1 | 22-09-2010 | NONE | | |

EPO FORM P0459

For more details about this annex : see Official Journal of the European Patent Office, No. 12/82